# EUROPÄISCHE PATENTSCHRIFT

(11) **EP 4 081 871 B1**
(45) Veröffentlichungstag und Bekanntmachung des Hinweises auf die Patenterteilung: **08.01.2025**
(21) Anmeldenummer: 21719115.4
(22) Anmeldetag: 14.04.2021
(51) Int. Cl.: G05B 19/46

(54) **STEUERUNGSVERFAHREN FÜR EIN TEILELEKTRONISCHES SYSTEM**
CONTROL METHOD FOR A PARTIALLY ELECTRONIC SYSTEM
PROCÉDÉ DE COMMANDE D'UN SYSTÈME PARTIELLEMENT ÉLECTRONIQUE

(30) Priorität: 13.05.2020 DE 102020002868
(43) Veröffentlichungstag der Anmeldung: 02.11.2022
(73) Patentinhaber: Hydac Mobilhydraulik GmbH, Sulzbach/Saar (DE)
(72) Erfinder: HINSBERGER, Kenny, 66287 Quierschied (DE); PFEIFFER, Felix, 14473 Potsdam (DE)
(74) Vertreter: Bartels und Partner, Patentanwälte
(86) Internationale Anmeldenummer: PCT/EP2021/059641
(87) Internationale Veröffentlichungsnummer: WO 2021/228482

(56) Entgegenhaltungen:
- EP-A1- 2 853 752
- DE-A1- 102013 206 973
- DE-A1- 102016 214 708
- KR-B1- 101 839 039

## Beschreibung

Die Erfindung betrifft ein Steuerungsverfahren für ein teilelektronisches System, wie ein elektrohydraulisches System, mit den Merkmalen im Oberbegriff von Anspruch 1.

Die DE 10 2017 004 299 A1 offenbart eine Vorrichtung zur Geschwindigkeitsregelung und Gleichlaufregelung von hydraulischen Aktuatoren, die insbesondere relativ zueinander bewegbare Teile von Transporteinrichtungen ansteuern, bestehend aus: zumindest einem Aktuator, wie einem hydraulischen Arbeitszylinder; einer Arbeitspumpe in Form einer Konstantpumpe zur Versorgung des Aktuators; einem Schaltventil als Ventilumschalteinrichtung für den Aktuator; einem ein elektroproportionales Stellglied bildenden elektrischen Antrieb für die Arbeitspumpe; einem Wegmesssystem zur Ermittlung der Ist-Position des Aktuators; und einem Frequenzumrichter mit einem Antriebsregler zum Durchführen eines Steuerungsverfahrens, der als Eingangsgrößen Messwerte aus dem Wegmesssystem erhält und mit seinen Ausgangsgrößen die Drehzahl des elektrischen Antriebes und dadurch die Leistung der Arbeitspumpe steuert.

Die DE 10 2016 214 708 A1 beschreibt ein Steuerungsverfahren und ein Steuerungssystem für ein teilelektronisches System, wie ein elektrohydraulisches System, mit den Schritten im Oberbegriff von Anspruch 1 bzw. 11 mit mindestens einem elektroproportionalen Stellglied, das in Abhängigkeit seiner Stellgröße zur Beeinflussung mindestens einer physikalischen Regelgröße des eine Regelstrecke aufweisenden Systems dient, wobei aus korrelierenden Zustandswerten von Stell- und Regelgröße ein Kennfeld erstellt wird, welches für Steuerungsvorgänge im späteren Betrieb des Systems herangezogen wird.

Weitere Steuerungsverfahren gehen aus der KR 10-1839039 B1, der EP 2 853 752 A1 und der DE 10 2013 206 973 A1 hervor.

Der Erfindung liegt die Aufgabe zugrunde das bekannte Steuerungsverfahren für ein teilelektronisches System dahingehend weiter zu verbessern, dass ein gewünschter Wert einer Regelgröße des Systems mit geringem Aufwand möglichst schnell eingeregelt wird.

Die dahingehende Aufgabe löst ein Steuerungsverfahren mit den Verfahrensschritten des Patentanspruchs 1 in seiner Gesamtheit.

Gemäß dem kennzeichnenden Teil des Anspruchs 1 ist das erfindungsgemäße Steuerungsverfahren dadurch gekennzeichnet, dass zur Erstellung des Kennfeldes der Wert der Stellgröße in zwei Phasen sägezahnförmig jeweils zunächst während einer ersten Zeitspanne gesteigert wird bis eine Sättigung des Regelgrößen-Wertes y(t) ermittelt wird und darauffolgend während einer gegenüber der ersten Zeitspanne kürzeren zweiten Zeitspanne reduziert wird.

Es ist ferner vorgesehen, dass aus korrelierenden Zustandswerten von Stell- und Regelgröße ein Kennfeld erstellt wird, welches für Steuerungsvorgänge im späteren Betrieb des Systems herangezogen wird.

Dadurch ist bei einem Betrieb des Systems unter Verwendung des Kennfeldes unter Vorgabe des gewünschten Regelgrößen-Wertes das Stellglied mit einem Stellgrößen-Wert ansteuerbar, der ein unverzügliches Einregeln der Regelgröße auf den gewünschten Regelgrößen-Wert bewirkt. Bei einem derart ausgebildeten Steuerungsverfahren entfällt - im Gegensatz zum Stand der Technik - ein zeitaufwändiges Einregeln der Regelgröße im Rahmen einer Einschwingphase aufgrund einer kontinuierlichen Änderung des Stellgrößen-Wertes unter Einbezug eines gemessenen und rückgeführten Regelgrößen-Wertes bis zum Erzielen des gewünschten tatsächlichen Regelgrößen-Wertes. Dazu ist lediglich ein einziges Mal vor Inbetriebnahme der Regelstrecke das Kennfeld zu ermitteln, das mehrfach für Steuerungsvorgänge im Betrieb des Systems herangezogen werden kann. Dies hat so keine Entsprechung im Stand der Technik.

Gegenstand der Erfindung ist auch ein elektrohydraulisches System zum Durchführen eines Steuerungsverfahrens gemäß Anspruch 11. Das System besteht zumindest aus einer Druckversorgungseinrichtung, einer Regelstrecke mit einem hydraulischen Verbraucher, und aus einem elektroproportionalen Stellglied in Form eines Proportionalventils, das von einer Steuerung ansteuerbar ist, die über eine Sensoreinrichtung aktuelle Zustandswerte einer Regelgröße der Regelstrecke erhält.

Weitere Vorteile der erfindungsgemäßen Lösungen sind Gegenstand der Unteransprüche.

Im Folgenden wird ein erfindungsgemäßes Steuerungsverfahren anhand des erfindungsgemäßen elektrohydraulischen Systems mittels der Zeichnung näher erläutert. Dabei zeigen in prinzipieller und nicht maßgeblicher Darstellung die
- Fig. 1: in der Art eines Blockschaltbildes das erfindungsgemäße Steuerungsverfahren;

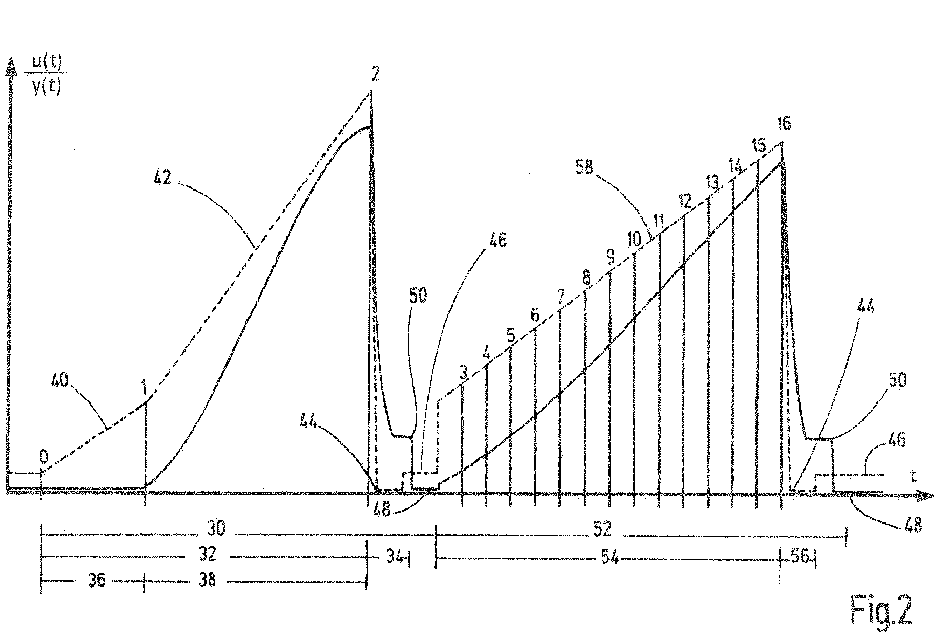

- Fig. 2: in einem kartesischen Koordinatensystem zeitliche Verläufe einer Stellgröße und einer von der Stellgröße abhängigen Regelgröße während der Ermittlung eines Steuer- und Regelgrößen-Wertkombinationen aufweisenden Kennfeldes als Teil des Steuerungsverfahrens;
- Fig. 3: in der Art eines hydraulischen Schaltplans ein erstes Ausführungsbeispiel eines erfindungsgemäßen Systems zum Durchführen des erfindungsgemäßen Steuerungsverfahrens, bei dem die Regelgröße der Drehzahl eines Hydromotors entspricht;
- Fig. 4: in der Art eines hydraulischen Schaltplans ein zweites Ausführungsbeispiel des erfindungsgemäßen Systems, bei dem die Regelgröße der Drehzahl eines Hydromotors entspricht;
- Fig. 5: in einem kartesischen Koordinatensystem Verläufe der tatsächlichen und der gemessenen Regelgröße in Form der Drehzahl des Hydromotors des ersten Ausführungsbeispiels aus Fig. 3 oder des zweiten Ausführungsbeispiels aus Fig. 4;
- Fig. 6: in der Art eines hydraulischen Schaltplans ein drittes Ausführungsbeispiel des erfindungsgemäßen Systems, bei dem die Regelgröße dem Versorgungsdruckwert an einem Verbraucher entspricht; und
- Fig. 7: in der Art eines hydraulischen Schaltplans ein viertes Ausführungsbeispiel des erfindungsgemäßen Systems, bei dem die Regelgröße dem Versorgungsdruckwert an einem Verbraucher entspricht.

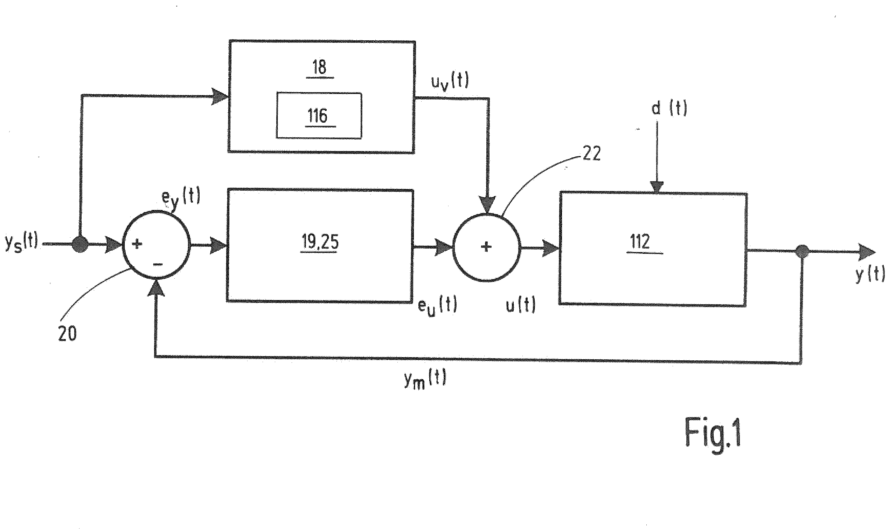

Die Fig. 1 zeigt ein Blockschaltbild des erfindungsgemäßen Steuerungsverfahrens für ein teilelektronisches System 110, wie beispielsweise ein elektrohydraulisches System 110. Das teilelektronische System 110 weist eine Regelstrecke 112 und ein elektroproportionales Stellglied 114 zum Beeinflussen einer physikalischen Regelgröße y(t) des Systems 110 in Abhängigkeit einer Stellgröße u(t) auf.

In einem ersten Verfahrensschritt wird vor Inbetriebnahme des Systems 110 ein Kennfeld 116 aus korrelierenden Zustandswerten von Stell- u(t) und Regelgröße y(t) erstellt, dessen Zustandswerte in einem zweiten Verfahrensschritt im Betrieb des Systems 110 verwendet werden für einen Steuerungsvorgang des Systems 110 in Form einer gezielten Einstellung eines statischen Zustands der Regelstrecke 112 des Systems 110.

Das Kennfeld 116 kann ermittelt werden jedes Mal vor Inbetriebnahme oder ein einziges Mal vor mehreren Inbetriebnahmen der Regelstrecke 112 oder nach einer Wartung der Regelstrecke 112 oder nach einem Austausch einer Komponente der Regelstrecke 112.

Das Kennfeld 116, das vorliegend Wertepaare von Stell- u(t) und Regelgröße y(t) aufweist, ist zweidimensional ausgebildet, kann jedoch um eine weitere Größe erweitert auch dreidimensional ausgebildet sein. Das Kennfeld 116 ist in der Art einer Tabelle oder Matrix ausgebildet und ordnet vorgegebenen diskreten Werten der Stellgröße u(t) ermittelte diskrete Werte der Regelgröße y(t) zu. Ein derartiges Kennfeld 116 kann auch als Lookup Table (LUT) oder Umsetzungstabelle bezeichnet werden.

Ist lediglich eine das Kennfeld 116 aufweisende Steuerung 18 vorgesehen, wird der Soll-Regelgrößen-Wert *yₛ*(*t*)*,* dessen Einregelung gewünscht ist, ausschließlich der Steuerung 18 zugeführt. Der diskrete Stellgrößen-Wert u(t), der in dem Kennfeld 116 dem der Steuerung 18 vorgebebenen Soll-Regelgrößen-Wert *yₛ*(*t*) zugeordnet ist, wird von der Steuerung 18 dem Stellglied 114 zugeführt, das entsprechend auf die Regelgröße y(t) der Regelstrecke 112 einwirkt.

Ist der das Kennfeld 116 aufweisenden Steuerung 18 im Sinne einer Vorsteuerung eine Regelung 19 zum Ausregeln von Störgrößen überlagert, wie in Fig. 1 gezeigt, wird als Führungsgröße der Soll-Regelgrößen-Wert *yₛ*(*t*), dessen Einregelung gewünscht ist, gleichermaßen der Steuerung 18 und einem ersten Summationspunkt 20 zugeführt. Der diskrete Stellgrößen-Wert *uᵥ*(*t*), der in dem Kennfeld 116 dem der Steuerung 18 vorgebebenen Soll-Regelgrößen-Wert *yₛ*(*t*) zugeordnet ist, wird von der Steuerung 18 einem zweiten Summationspunkt 22 zugeführt. Dem ersten Summationspunkt 20 wird neben dem vorgegebenen Soll-Regelgrößen-Wert *yₛ*(*t*) der gemessene Ist-Regelgrößen-Wert *yₘ*(*t*) zugeführt. Der erste Summationspunkt 20 ermittelt die Differenz zwischen dem vorgegebenen Soll-Regelgrößen-Wert *yₛ*(*t*) und dem gemessenen Ist-Regelgrößen-Wert *yₘ*(*t*), also die Regelgrö-βen-Wert-Abweichung *e_{y}*(*t*), die einem Regler 25 der Regelung 19, insbesondere einem PID-Regler 25, zugeführt wird. Der Regler 25 ermittelt basierend auf der Regelgrößen-Wert-Abweichung *e_{y}*(*t*) eine Stellgrößen-Wert-Abweichung *eᵤ*(*t*) und führt diese dem zweiten Summationspunkt 22 zu. Der zweite Summationspunkt 22 führt die Summe seiner Eingangswerte, nämlich den störgrößenbereinigten Stellgrößen-Wert u(t) dem Stellglied 114 zu, das entsprechend auf die Regelgröße y(t) der Regelstrecke 112 einwirkt.

Die Steuerung 18 und die der Steuerung 18 überlagerte Regelung 19 bilden gemeinsam eine Regelung.

Zur automatisierten Erstellung des Kennfeldes 116 durchläuft der mit einer gestrichelten Linie dargestellte Stellgrößen-Wert u(t) kontinuierlich kennlinien- und sägezahnförmig eine zweiphasige Sequenz 30, 52. Die erste Phase 30 der Sequenz beginnt an einem Zeitpunkt 0, ab dem der Stellgrö-βen-Wert u(t) in einer ersten Zeitspanne 32 in zwei Abschnitten 36, 38 jeweils linear gesteigert wird. Während des zeitlich ersten Abschnitts 36 wird der Stellgrößen-Wert u(t) mit einer ersten Steigung 40 so lange gesteigert, bis eine initiale Änderung des mit einer ununterbrochenen Linie dargestellten Regelgrößen-Wertes y(t) ermittelbar ist. In dem ersten Abschnitt 36 sollte die Änderungsrate des Stellgrößen-Wertes u(t) relativ geringgehalten werden, um die einsetzende Änderung des Regelgrößen-Wertes y(t) möglichst genau erkennen zu können. Wird eine initiale Änderung des Regelgrößen-Wertes y(t) ermittelt, wird ein Übergang zum zweiten Abschnitt 38 der ersten Zeitspanne 32 vollzogen, in dem der Stellgrößen-Wert u(t) so lange mit einer gegenüber der ersten Steigung 40 größeren zweiten Steigung 42 gesteigert wird bis eine Sättigung des Regelgrößen-Wertes y(t) ermittelbar ist. Die Sättigung des Regelgrößen-Wertes y(t) ist dadurch ermittelbar, dass deren Änderungsrate einen vorgebbaren Schwellenwert unterschreitet, so dass keine signifikante Zunahme des Regelgrößen-Wertes y(t) mehr zu erkennen ist.

Wird die Sättigung des Regelgrößen-Wertes y(t) erkannt, wird die zweite Zeitspanne 34 der ersten Phase 30 eingeleitet. In der zweiten Zeitspanne 34 der ersten Phase 30, die gegenüber der ersten Zeitspanne 32 wesentlich kürzer ist, wird der Stellgrößen-Wert u(t) sprungförmig bis auf ein Minimum 44, insbesondere ca. Null, reduziert, wodurch die Regelgröße y(t) zunächst auf einen Mindestwert 50 abfällt, der größer Null ist. Bevor die Regelgröße y(t) mit einer Zeitverzögerung bis auf ein Minimum 48, insbesondere ca. Null, abfällt, wird die Stellgröße u(t) bereits sprungförmig auf einen Mindestwert 46, der größer Null ist, gesteigert, bei dem die Regelgröße y(t) ihr Minimum 48 beibehält. Die Zeitspanne zwischen dem Zeitpunkt, an dem der Stellgrößen-Wert u(t) sein Minimum 44 annimmt, und dem Zeitpunkt, an dem der Stellgrößen-Wert u(t) seinen Mindestwert 46 annimmt, beträgt ca. eine Sekunde.

Dass die Regelgröße y(t) nach der Reduktion der Stellgröße u(t) nicht sofort, sondern mit einer Zeitverzögerung auf ihr Minimum 48 abfällt, rührt daher, dass die Erfassung der Regelgröße y(t) regelmäßig mittels Impulserfassung erfolgt, die eine Tiefpass-Filterung der Regelgröße y(t) erfordert. Hierdurch kommt es bei abruptem Ausbleiben der Rückführung der Regelgröße y(t) zu einer Fehlinterpretation der Regelgröße y(t) dahingehend, dass der Messwert der Regelgröße y(t) nicht sofort als Null erkannt wird.

Das Wertepaar aus Stellgrößen- u(t) und Regelgrößen-Wert y(t) des Übergangs von dem ersten Abschnitt 36 zu dem zweiten Abschnitt 38 (Zeitpunkt 1) wird als Startwertepaar und der Sättigung der Regelgröße y(t) (Zeitpunkt 2) wird als Endwertepaar in dem Kennfeld 116 abgelegt. Basierend auf diesem Start und Endwert der Stellgröße u(t) wird die Anzahl der zwischen diesen liegenden, in dem Kennfeld 116 abzulegenden Zustandswerte der Stellgröße u(t) festgelegt, deren korrelierende Regelgrößen-Werte y(t) in der zweiten Phase 52 zu ermitteln sind.

Zu Beginn der zweiten Phase 52 wird die Stellgröße u(t) zunächst sprungartig auf den Stellgrößen-Wert u(t) des Zeitpunkts 1 gesteigert. Daraufhin wird der Wert der Stellgröße u(t) während der ersten Zeitspanne 54 der zweiten Phase 52 ausgehend von dem Stellgrößen-Wert u(t) des Zeitpunkts 1 in Richtung des Stellgrößen-Wertes u(t) des Zeitpunktes 2 mit einer dritten Steigung 58 gesteigert, die geringer ist als die zweite Steigung 42 des Stellgrößen-Wertes u(t) in dem zweiten Abschnitt 38 der ersten Zeitspanne 32 der ersten Phase 30, jedoch geringfügig größer ist als die erste Steigung 40 des Stellgrößen-Wertes u(t) in dem ersten Abschnitt 36 der ersten Zeitspanne 32 der ersten Phase 30. Dabei endet die Steigerung der Stellgröße u(t) mit einem Wert, der als vorletzter Stellgrößenwert u(t) vor dem letzten Stellgrößen-Wert u(t) des Zeitpunkts 2 in dem Kennfeld 116 abgelegt werden soll, so dass der Stellgrößen-Wert u(t) des Zeitpunktes 2 in der zweiten Phase 52 nicht erreicht wird.

Während dieser ersten Zeitspanne 54 der zweiten Phase 52 werden mehrere Wertepaare von Stell- u(t) und Regelgröße y(t), vorliegend vierzehn Wertepaare (Zeitpunkte 3 bis 16), in dem Kennfeld 116 abgelegt, deren Stellgrößen-Werte u(t) zwischen dem Startwert der Stellgröße u(t) zum Zeitpunkt 1 und dem Endwert der Stellgröße u(t) zum Zeitpunkt 2 liegen. Die Zustandswerte der Stellgröße u(t) sind vorliegend äquidistant über die erste Zeitspanne 54 der zweiten Phase 52 verteilt, können jedoch aber auch davon abweichend über die erste Zeitspanne 54 der zweiten Phase 52 beliebig verteilt sein.

Anschließend wird der Wert der Stellgröße u(t) in der zweiten Zeitspanne 56 der zweiten Phase 52 wiederum auf das Minimum 44, insbesondere ca. Null, reduziert, woraufhin die Regelgröße y(t) zunächst auf ihren Mindestwert 50 abfällt, der größer Null ist. Noch bevor der Wert der Regelgröße y(t) mit einer Zeitverzögerung sein Minimum 48, insbesondere ca. Null, erreicht, wird die Stellgröße u(t) sprungförmig auf ihren Mindestwert 46 gesteigert, der größer Null ist. Damit sind die beiden Phasen 30, 52 der automatischen Erfassung des Verlaufs der Regelgrößen-Kennlinie zum Erstellen des Kennfeldes 116 abgeschlossen.

Denkbar ist, dass unter Verwendung des Kennfeldes 116 zu einem vorgegebenen Stellgrößen-Wert u(t), der zwischen zwei in dem Kennfeld 116 abgelegten Stellgrößen-Werten u(t) liegt, der zugehörige Regelgrößen-Wert y(t) interpoliert wird oder zu einem vorgegebenen Regelgrößen-Wert y(t), der zwischen zwei in dem Kennfeld 116 abgelegten Regelgrößen-Werten y(t) liegt, der zugehörige Stellgrößen-Wert u(t) interpoliert wird. Die interpolierten Werte können genauso wie die durch die automatische Kennlinienerfassung gewonnenen Werte zur Steuerung bzw. Regelung der Regelgröße y(t) dienen.

Die Regelstrecke 112 kann hydromechanisch ausgebildet sein und/oder Teil einer Transporteinrichtung, eines Streutellers, einer Dosierwelle oder eines Mähwerkes sein.

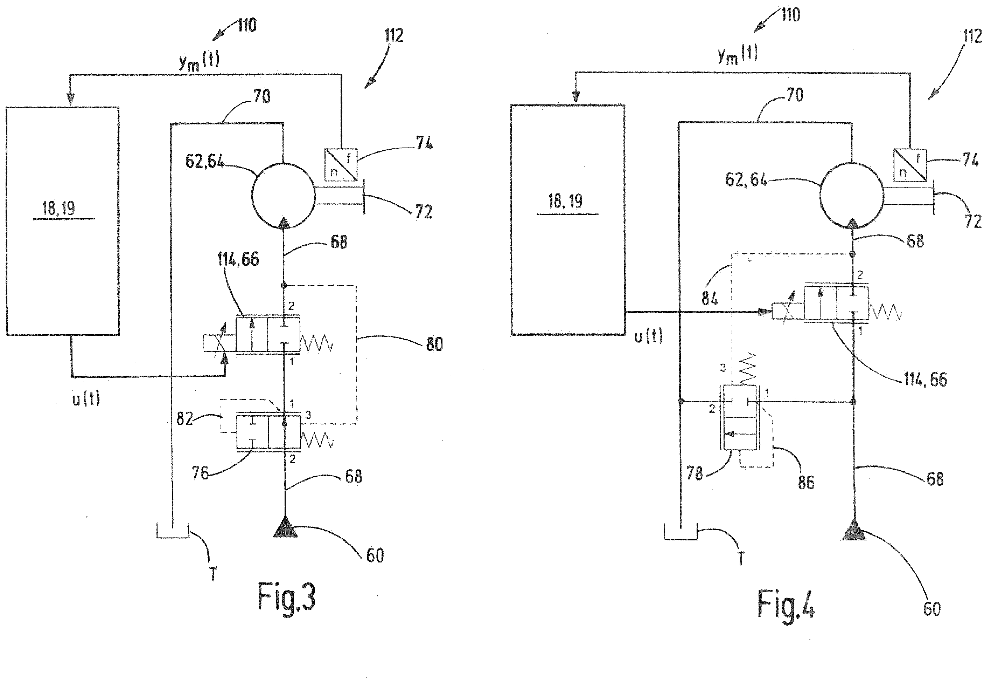

Fig. 3 zeigt ein erstes Ausführungsbeispiel und Fig. 4 ein zweites Ausführungsbeispiel eines elektrohydraulischen Systems 110 zum Durchführen des erfindungsgemäßen Steuerungsverfahrens. Das System weist eine Regelstrecke 112 mit einer Druckversorgungseinrichtung 60 und einem hydraulischen Verbraucher 62 in Form eines Hydromotors 64, und ein elektroproportionales Stellglied 114 in Form eines 2/2-Wege-Proportionalventils 66 auf. Die Druckversorgungseinrichtung 60 ist hochdruckseitig über eine erste Fluidleitung 68 mit dem Hydromotor 64 fluidführend verbunden, der ausgangsseitig über eine zweite Fluidleitung 70 an einen Tank T angeschlossen ist. In der ersten Fluidleitung 68 ist das 2/2-Wege-Proportionalventil 66 vorgesehen, dessen Ventilkolben mit einer einstellbaren Schließkraft, elektromagnetisch angesteuert, entgegen der Kraft einer Druckfeder von einer in der Fig. 3 und 4 gezeigten ersten Endstellung in eine zweite Endstellung bringbar ist. In der zweiten Endstellung des Ventilkolbens verbindet das Proportionalventil 66 seine beiden Anschlüsse über einen strömungsverengungsfreien Fluidweg miteinander, wohingegen dieser Fluidweg in der ersten Endstellung gesperrt ist. Der Ansteuerstrom I der Spule einer Betätigungseinrichtung des Proportionalventils 66 stellt die Stellgröße u(t) dar. Die jeweilige Spule ist in den Figuren als Rechteck mit einem demgegenüber schräg verlaufenden Pfeil dargestellt. An einer Motorwelle 72 des Hydromotors 64 ist ein Drehzahl-Sensor 74 vorgesehen, zwecks Erfassen der Regelgröße y(t) in Form der Drehzahl n des Hydromotors 64. Der Drehzahl-Sensor 74 kann als Drehzahl-zu-Frequenz-Wandler, Drehzahl-zu-Strom-Wandler, Drehzahl-zu-Spannung-Wandler ausgebildet sein und/oder eine CAN-Bus-basierte Signalausgabe aufweisen. Alternativ kann die Drehzahl n des Hydromotors 64 auch an einer anderen Stelle der zugehörigen Mechanik erfasst werden. Der Drehzahl-Sensor 74 ist eingangsseitig an eine Steuerung 18, 19 als Teil des Systems 110 angeschlossen, die ausgangsseitig an die Betätigungseinrichtung des Proportionalventils 66 angeschlossen ist. Die Steuerung 18,19 führt das erfindungsgemäße Steuerungsverfahren aus. Mittels der dahingehenden Anordnung sind die Drehzahl n des Hydromotors 64 und der Volumenstrom des von dem Hydromotor 64 abgegebenen Fluides regelbar.

Das erste Ausführungsbeispiel des Systems nach Fig. 3 und das zweite Ausführungsbeispiel des Systems nach Fig. 4 unterscheiden sich lediglich hinsichtlich der Ausführung und Verschaltung einer verwendeten Druckwaage 76, 78.

In Fig. 3 ist in die erste Fluidleitung 68 zwischen der Druckversorgungseinrichtung 60 und dem Proportionalventil 66 eine Zulaufdruckwaage 76 geschaltet, deren Ventilkolben zwischen einer in Fig. 3 gezeigten ersten Endstellung und einer zweiten Endstellung verfahrbar ist. In Richtung seiner ersten Endstellung wirken auf die eine Stirnseite des Ventilkolbens der Zulaufdruckwage 76 eine Druckfeder und der Fluiddruck in der ersten Fluidleitung 68 zwischen dem Proportionalventil 66 und dem Hydromotor 64, der über eine erste Steuerleitung 80 auf die eine Stirnseite des Ventilkolbens geführt ist. In Richtung seiner zweiten Endstellung wirkt auf die andere Stirnseite des Ventilkolbens der Fluiddruck in der ersten Fluidleitung 68 zwischen der Zulaufdruckwaage 76 und dem Proportionalventil 66, der über eine zweite Steuerleitung 82 auf die andere Stirnseite des Ventilkolbens der Zulaufdruckwaage 76 geführt ist. In der ersten Endstellung des Ventilkolbens verbindet die Zulaufdruckwaage 76 die Druckversorgungseinrichtung 60 mit dem Proportionalventil 66 fluidführend über einen strömungsverengungsfreien Fluidweg, wohingegen dieser Fluidweg in der zweiten Endstellung des Ventilkolbens gesperrt ist.

In Fig. 4 ist eine Umlauf-Druckwaage 78 vorgesehen, die eingangsseitig an die erste Fluidleitung 68 zwischen Druckversorgungseinrichtung 60 und Proportionalventil 66 und ausgangsseitig an die zweite Fluidleitung 70 angeschlossen ist. Der Ventilkolben der Umlauf-Druckwaage 78 ist zwischen einer in Fig. 4 gezeigten ersten Endstellung und einer zweiten Endstellung verfahrbar. In Richtung der ersten Endstellung wirken auf die eine Stirnseite des Ventilkolbens der Umlauf-Druckwaage 78 eine Druckfeder und der Fluiddruck in der ersten Fluidleitung 68 zwischen dem Proportionalventil 66 und dem Hydromotor 64, der über eine dritte Steuerleitung 84 auf die eine Stirnseite des Ventilkolbens der Umlauf-Druckwaage 78 geführt ist. In Richtung der zweiten Endstellung wirkt auf die andere Stirnseite des Ventilkolbens der Umlauf-Druckwaage 78 der Fluiddruck in der ersten Fluidleitung 68 zwischen der Druckversorgungseinrichtung 60 und dem Proportionalventil 66, der über eine vierte Steuerleitung 86 auf die andere Stirnseite des Ventilkolbens der Umlauf-Druckwaage 78 geführt ist.

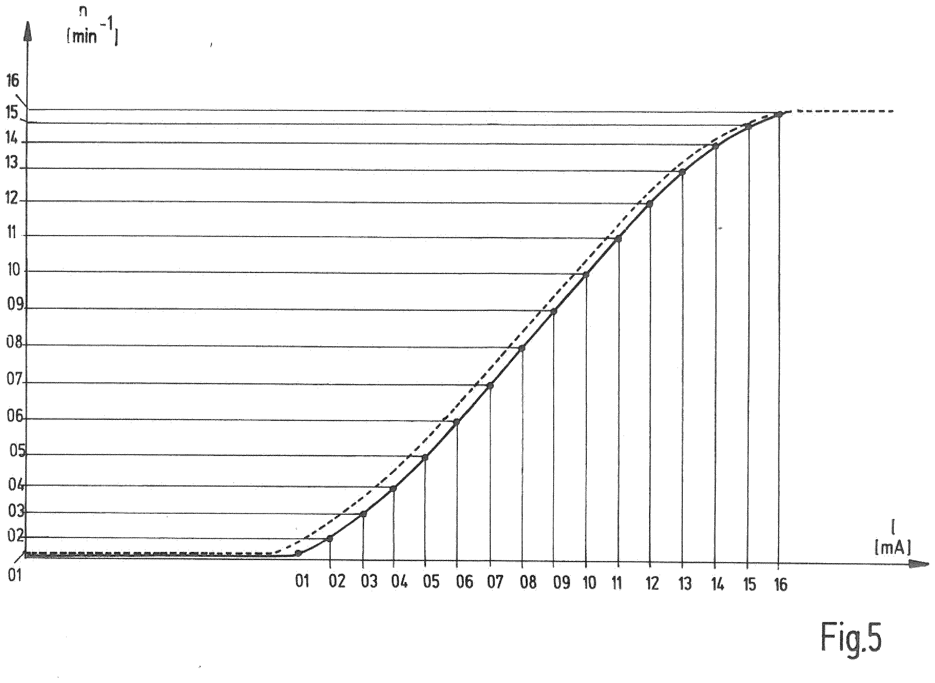

In Fig. 5 ist in Abhängigkeit des von der Betätigungseinrichtung des Proportionalventils 66 aufgenommenen Stromwertes I der Verlauf des tatsächlichen Ist-Regelgrößen-Wertes y(t), der mit einer gestrichelten Linie dargestellt ist, und der Verlauf des mittels des jeweiligen Drehzahlsensors 74 gemessenen Regelgrößen-Wertes *yₘ*(*t*) aufgetragen, der mit einer ununterbrochenen Linie dargestellt ist, die sich in einem Offset unterscheiden. Ein derartiger Offset kann durch eine entsprechende Parametrierung der Sequenz 30, 52, also des Stellgrößenverlaufs, bei der Kennfelderfassung minimiert werden und ergibt sich regelmäßig durch auf die Regelstrecke 112 wirkende Störgrößen d(t) und/oder durch Trägheitseffekte der Regelstrecke 112 und/oder durch eine Messanordnung der Regelgröße y(t), beispielsweise durch die Tiefpass-Filterung bei der Messung des Ist-Regelgrößen-Wertes y(t).

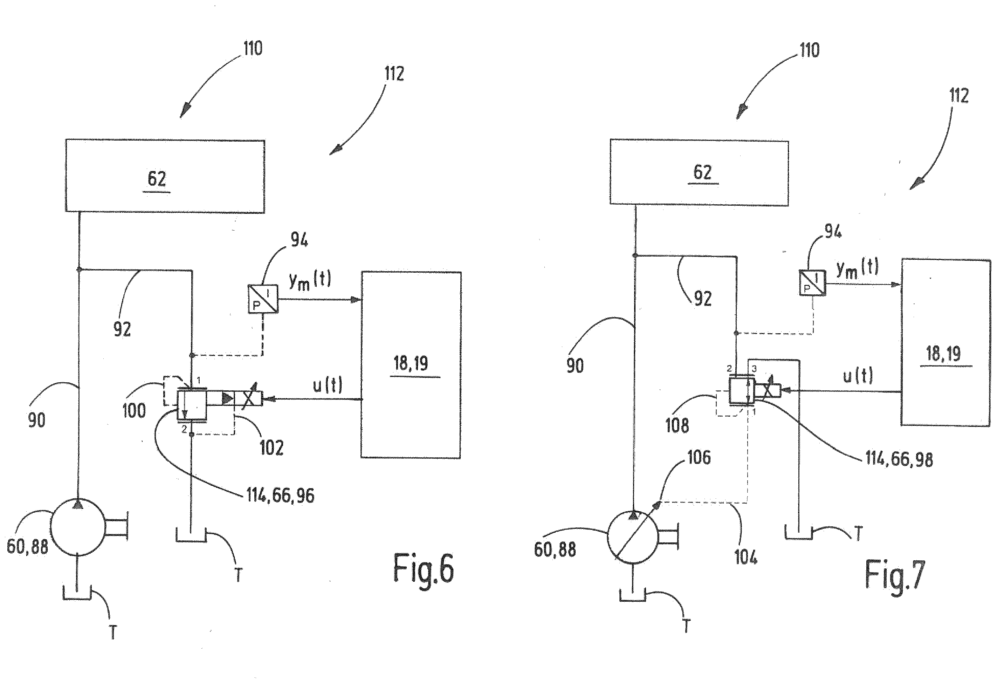

Fig. 6 zeigt ein drittes Ausführungsbeispiel und Fig. 7 ein viertes Ausführungsbeispiel des erfindungsgemäßen elektrohydraulischen Systems 110 zum Durchführen des Steuerungsverfahrens. Das jeweilige System 110 weist eine Regelstrecke 112 mit einer Druckversorgungseinrichtung 60 in Form einer Hydropumpe 88 und einem hydraulischen Verbraucher 62, und ein elektroproportionales Stellglied 114 in Form eines Proportionalventils 66 auf. Die Hydropumpe 88 ist hochdruckseitig über eine dritte Fluidleitung 90 mit dem hydraulischen Verbraucher 62 fluidführend verbunden. Das Proportionalventil 66 ist über eine vierte Fluidleitung 92 eingangsseitig an die dritte Fluidleitung 90 und ausgangsseitig an einen Tank T angeschlossen. Der Ansteuerstrom I einer Spule einer Betätigungseinrichtung des Proportionalventils 66 stellt die Stellgröße u(t) dar. Die jeweilige Spule ist in den Figuren als Rechteck mit einem demgegenüber schräg verlaufenden Pfeil dargestellt. Ein Drucksensor 94 ist eingangsseitig an die vierte Fluidleitung 92 angeschlossen, zwecks Erfassen der Regelgröße y(t) in Form eines Druckwertes in der vierten Fluidleitung 92. Der Drucksensor 94 kann als Druck-zu-Strom-Wandler, Druck-zu-Spannung-Wandlers ausgebildet sein und/oder eine CAN-Bus-basierte Signalausgabe aufweisen. Ausgangsseitig ist der Drucksensor 94 an eine Steuerung 18 als Teil des Systems 110 angeschlossen, die ausgangsseitig an die Betätigungseinrichtung des Proportionalventils 66 angeschlossen ist. Die Steuerung 18 führt das erfindungsgemäße Steuerungsverfahren aus. Mittels der dahingehenden Anordnung ist der Versorgungsdruck am Verbraucher 62 regelbar.

Das dritte Ausführungsbeispiel des Systems nach Fig. 6 und das vierte Ausführungsbeispiel des Systems nach Fig. 7 unterscheiden sich lediglich hinsichtlich der Ausführung und Verschaltung des verwendeten Proportionalventils 66.

In Fig. 6 ist das Proportionalventil 66 als Druckbegrenzungsventil 96 ausgebildet. Der Fluiddruck in der vierten Fluidleitung 92 ist über eine sechste Steuerleitung 100 auf eine Stirnseite des Ventilkolbens des Druckbegrenzungsventils 96 geführt und der Fluiddruck in der Fluidleitung zwischen Druckbegrenzungsventil 96 und Tank T wird über eine siebte Steuerleitung 102 der Betätigungseinrichtung des Druckbegrenzungsventils 96 zugeführt.

In Fig. 7 ist das Proportionalventil 66 als Druckregelventil 98 ausgebildet. Ein Anschluss des Druckregelventils 98 ist über eine achte Steuerleitung 104 mit einer Schwenkwinkeleinstellung 106 der Hydropumpe 88 verbunden und über eine neunte Steuerleitung 108 auf eine Stirnseite des Ventilkolbens des Druckregelventils 98 geführt.

Alternativ kann die Regelgröße der Verfahrweg eines Aktuatorkolbens und die Stellgröße der Ansteuerstrom eines Pumpenmotors einer Versorgungspumpe sein.

Der Spulenstrom I der Betätigungseinrichtung des jeweiligen Proportionalventils 66 entspricht ohne Vorgabe nicht dem Wert Null, sondern dem Mindestwert 46. Während der Erfassung des Kennfeldes 116 wird bei einem abrupten Abfallen des Stellwertes u(t) der Spulenstrom I auf sein Minimum 44 reduziert bevor er anschließend wieder auf den besagten Mindestwert 46 angehoben wird.

## Patentansprüche

1. Steuerungsverfahren für ein teilelektronisches System (110), wie ein elektrohydraulisches System (110), mit mindestens einem elektroproportionalen Stellglied (114), das in Abhängigkeit seiner Stellgröße (u(t)) zur Beeinflussung mindestens einer physikalischen Regelgröße (y(t)) des eine Regelstrecke (112) aufweisenden Systems (110) dient, wobei aus korrelierenden Zustandswerten von Stell- (u(t)) und Regelgröße (y(t)) ein Kennfeld (116) erstellt wird, welches für Steuerungsvorgänge im späteren Betrieb des Systems (110) herangezogen wird, **dadurch gekennzeichnet, dass** zur Erstellung des Kennfeldes (116) der Wert der Stellgröße (u(t)) in zwei Phasen (30, 52) sägezahnförmig jeweils zunächst während einer ersten Zeitspanne (32, 54) gesteigert wird bis eine Sättigung des Regelgrößen-Wertes y(t) ermittelt wird und darauffolgend während einer gegenüber der ersten Zeitspanne (32, 54) kürzeren zweiten Zeitspanne (34, 56) reduziert wird.

2. Steuerungsverfahren nach Anspruch 1, **dadurch gekennzeichnet, dass** das die Zustandswerte der Stell- (u(t)) und Regelgröße (y(t)) aufweisende Kennfeld (116) zwei- oder dreidimensional ist und dazu dient, mindestens einen statischen Zustand der Regelstrecke (112) des Systems (110) gezielt einzustellen.

3. Steuerungsverfahren nach Anspruch 1 oder 2, **dadurch gekennzeichnet, dass** der das Kennfeld (116) aufweisenden Steuerung (18), die als eine gezielte Vorsteuerung jeweils einen Wert der Regelgröße (y(t)) für die Regelstrecke (112) einstellt, eine Regelung (19) zum Ausregeln von Störgrößen überlagert wird.

4. Steuerungsverfahren nach einem der vorstehenden Ansprüche, **dadurch gekennzeichnet, dass** zur Erstellung des Kennfeldes (116) der Wert der Stellgröße (u(t)) in zwei Phasen (30, 52) sägezahnförmig jeweils zunächst während der ersten Zeitspanne (32, 54) gesteigert wird und darauffolgend während der gegenüber der ersten Zeitspanne (32, 54) kürzeren zweiten Zeitspanne (34, 56) reduziert wird bis auf Null.

5. Steuerungsverfahren nach einem der vorstehenden Ansprüche, **dadurch gekennzeichnet, dass** in der ersten Zeitspanne (32) der ersten Phase (30) der Wert der Stellgröße (u(t)) in zwei Abschnitten (36, 38) jeweils linear gesteigert wird, und dass der Wert der Stellgröße (u(t)) in dem zeitlich ersten Abschnitt (36) so lange mit einer ersten Steigung (40) gesteigert wird bis eine initiale Änderung der Regelgröße (y(t)) ermittelbar ist, woraufhin in dem zeitlich zweiten Abschnitt (38) der Wert der Stellgröße (u(t)) mit einer gegenüber der ersten Steigung (40) größeren zweiten Steigung (42) gesteigert wird bis die Sättigung der Regelgröße (y(t)) ermittelbar ist.

6. Steuerungsverfahren nach einem der vorstehenden Ansprüche, **dadurch gekennzeichnet, dass** das Wertepaar von Stell- (u(t)) und Regelgröße (y(t)) an dem Zeitpunkt des Übergangs von dem ersten Abschnitt (36) zu dem zweiten Abschnitt (38) als Startwertepaar und an dem Zeitpunkt der Sättigung der Regelgröße (y(t)) als Endwertepaar in dem Kennfeld (116) abgelegt werden.

7. Steuerungsverfahren nach einem der vorstehenden Ansprüche, **dadurch gekennzeichnet, dass** in der ersten Zeitspanne (54) der zweiten Phase (52) die Stellgröße (u(t)) mit einer linearen dritten Steigung (58) mit ihrem Startwert beginnend in Richtung ihres Endwertes gesteigert wird.

8. Steuerungsverfahren nach einem der vorstehenden Ansprüche, **dadurch gekennzeichnet, dass** in der ersten Zeitspanne (54) der zweiten Phase (52) zumindest ein Wertepaar von Stell- (u(t)) und Regelgröße (y(t)) in dem Kennfeld (116) abgelegt werden, dessen Stellgrößen-Wert (u(t)) zwischen ihrem Start und ihrem Endwert liegt.

9. Steuerungsverfahren nach einem der vorstehenden Ansprüche, **dadurch gekennzeichnet, dass** die dritte Steigung (58) des Wertes der Stellgröße (u(t)) in der ersten Zeitspanne (54) der zweiten Phase (52) geringer ist als die zweite Steigung (42) des Wertes der Stellgröße (u(t)) in dem zweiten Abschnitt (38) der ersten Zeitspanne (32) der ersten Phase (30).

10. Steuerungsverfahren nach einem der vorstehenden Ansprüche, **dadurch gekennzeichnet, dass** durch eine Parametrierung des Werteverlaufs der Stellgröße (u(t)) eine Abweichung der erfassten Regelgröße (y(t)) von der tatsächlichen Regelgröße (y(t)), insbesondere bedingt durch Trägheitseffekte der Regelstrecke (112) und/oder durch eine Filterung des jeweiligen Regelgrößensignals (y(t)) für dessen Rückführung, begegnet wird.

11. Elektrohydraulisches System (110) zum Durchführen eines Steuerungsverfahrens nach einem der vorstehenden Ansprüche, **dadurch gekennzeichnet, dass** es zumindest besteht aus einer Druckversorgungseinrichtung (60), einer Regelstrecke (112) mit einem hydraulischen Verbraucher (62), und einem elektroproportionalen Stellglied (114) in Form eines Proportionalventils (66), das von einer Steuerung (18) ansteuerbar ist, die über eine Sensoreinrichtung (74, 94) aktuelle Zustandswerte einer Regelgröße (y(t)) der Regelstrecke (112) erhält.

12. System nach Anspruch 11, **dadurch gekennzeichnet, dass** die Sensoreinrichtung (74,94) als Regelgröße (y(t)) die Drehzahl n eines als hydraulischen Verbraucher (62) vorgesehenen Hydromotors (64) der Regelstrecke (112) erfasst oder einen jeweiligen Druckwert eines hydraulischen Kreises der Regelstrecke (112).

## Claims

1. Control method for a partially electronic system (110), such as an electrohydraulic system (110), having at least one electro-proportional actuator (114) which serves to influence at least one physical control variable (y(t)) of the system (110), comprising a control path (112), as a function of the controlled variable (u(t)) of said actuator, wherein a characteristic diagram (116) is created from correlating state values of the controlled (u(t)) and control variable (y(t)), said characteristic diagram being consulted for control processes in subsequent operation of the system (110), **characterised in that** to create the characteristic diagram (116), the value of the controlled variable (u(t)) is initially increased in two phases (30, 52) in a saw-toothed manner in each case, during a first time period (32, 54), until a saturation of the control variable value y(t) is determined, and is subsequently reduced during a second time period (34, 56) that is shorter than the first time period (32, 54).

2. Control method according to claim 1, **characterised in that** the characteristic diagram (116) comprising the state values of the controlled (u(t)) and control variable (y(t)) is two-dimensional or three-dimensional, and serves to purposely set at least a static state of the control path (112) of the system (110).

3. Control method according to either claim 1 or claim 2, **characterised in that** the open-loop control (18) comprising the characteristic diagram (116), said open-loop control system in each case setting a value of the control variable (y(t)) for the control path (112) as a specific pilot control, is superimposed with a closed-loop control system (19) for correcting disturbance variables.

4. Control method according to any of the preceding claims, **characterised in that**, to create the characteristic diagram (116), the value of the controlled variable (u(t)) is initially increased in two phases (30, 52) in a saw-toothed manner in each case, during the first time period (32, 54), and is subsequently reduced to zero during a second time period (34, 56) that is shorter than the first time period (32, 54).

5. Control method according to any of the preceding claims, **characterised in that**, in the first time period (32) of the first phase (30), the value of the controlled variable (u(t)) is increased linearly in each case in two portions (36, 38), and **in that** the value of the controlled variable (u(t)) is increased in the first time portion (36) with a first gradient (40) until an initial change in the control variable (y(t)) can be determined, whereupon in the second time portion (38) the value of the controlled variable (u(t)) is increased with a second gradient (42) that is larger than the first gradient (40), until saturation of the control variable (y(t)) can be determined.

6. Control method according to any of the preceding claims, **characterised in that** the value pair consisting of the controlled (u(t)) and control variable (y(t)) at the time of the transition from the first portion (36) to the second portion (38) is stored in the characteristic diagram (116) as a starting value pair, and at the time of saturation of the control variable (y(t)) is stored in said characteristic diagram (116) as the end value pair.

7. Control method according to any of the preceding claims, **characterised in that**, in the first time period (54) of the second phase (52), the controlled variable (u(t)) is increased with a linear third gradient (58) beginning with its starting value in the direction of its end value.

8. Control method according to any of the preceding claims, **characterised in that**, in the first time period (54) of the second phase (52), at least one value pair of the controlled (u(t)) and control variable (y(t)) is stored in the characteristic diagram (116), the controlled variable value (u(t)) of which is located between its start and its end value.

9. Control method according to any of the preceding claims, **characterised in that** the third gradient (58) of the value of the controlled variable (u(t)) in the first time period (54) of the second phase (52) is smaller than the second gradient (42) of the value of the controlled variable (u(t)) in the second portion (38) of the first time period (32) of the first phase (30).

10. Control method according to any of the preceding claims, **characterised in that**, by parameterisation of the value curve of the controlled variable (u(t)), a deviation of the acquired control variable (y(t)) from the actual control variable (y(t)), in particular caused by inertial effects of the control path (112) and/or by filtering of the respective control variable signal (y(t)) for the return thereof, is countered.

11. Electrohydraulic system (110) for carrying out a control method according to any of the preceding claims, **characterised in that** it consists at least of a pressure supply means (60), a control path (112) having a hydraulic consumer (62), and an electro-proportional actuator (114) in the form of a proportional valve (66), which can be actuated by an open-loop control (18) which obtains current state values of a control variable (y(t)) of the control path (112) via a sensor means (74, 94).

12. System according to claim 11, **characterised in that** the sensor means (74, 94) acquires, as the control variable (y(t)), the speed n of a hydraulic motor (64) of the control path (112) provided as the hydraulic consumer (62), or a respective pressure value of a hydraulic circuit of the control path (112).

## Revendications

1. Procédé de commande d'un système (110) partiellement électronique, comme un système (110) électrohydraulique, comprenant au moins un organe (114) de réglage proportionnel, qui sert, en fonction de sa grandeur (u(t)) réglante, à influencer au moins une grandeur (y(t)) réglée physique du système (110) comportant un système (112) asservi, dans lequel, à partir de valeurs d'état en corrélation de grandeur (u(t)) réglante et de grandeur (y(t)) réglée, on établit un diagramme (116) caractéristique, dont on tire parti pour des opérations de commande dans le fonctionnement ultérieur du système (110), **caractérisé en ce que**, pour l'établissement du diagramme (116) caractéristique, on élève la valeur de la grandeur (u(t)) réglante en deux phases (30, 52) en forme de dents de scie, respectivement d'abord, pendant un premier laps (32, 54) de temps, jusqu'à déterminer une saturation de la valeur (y(t)) de la grandeur réglante et on la réduit ensuite pendant un deuxième laps (34, 56) de temps écourté par rapport au premier laps (32, 54) de temps.

2. Procédé de commande suivant la revendication 1, **caractérisé en ce que** le diagramme (116) caractéristique, ayant les valeurs d'état de la grandeur (u(t)) réglante et de la grandeur (y(t)) réglée, est en deux dimensions ou en trois dimensions et sert à établir, de manière ciblée, au moins un état statique du système (112) asservi du système (110).

3. Procédé de commande suivant la revendication 1 ou 2, **caractérisé en ce que** l'on superpose à la commande (18), qui comporte le diagramme (116) caractéristique et qui établit, comme commande préalable ciblée, respectivement une valeur de la grandeur (y(t)) réglée pour le système (112) asservi, une régulation (19) pour le réglage de grandeurs perturbatrices.

4. Procédé de commande suivant l'une des revendications précédentes, **caractérisé en ce que**, pour l'établissement du diagramme (116) caractéristique, on élève d'abord la valeur de la grandeur (u(t)) réglante en deux phases (30, 52) en forme de dents de scie, respectivement d'abord pendant le premier laps (32, 54) de temps, et on la réduit à zéro ensuite pendant le deuxième laps (34, 56) de temps écourté par rapport au premier laps (32, 54) de temps.

5. Procédé de commande suivant l'une des revendications précédentes, **caractérisé en ce que**, dans le premier laps (32) de temps de la première phase (30), on élève respectivement linéairement la valeur de la grandeur (u(t)) réglante en deux parties (36, 38), et **en ce que** l'on élève, avec une première élévation (40), la valeur de la grandeur (u(t)) réglante dans la première partie (36) dans le temps jusqu'à pouvoir déterminer une variation initiale de la grandeur (y(t)) réglée puis, dans la deuxième partie (38) dans le temps, on élève la valeur de la grandeur (u(t)) réglante avec une deuxième élévation (42) plus grande que la première élévation (40) jusqu'à pouvoir déterminer la saturation de la grandeur (y(t)) réglée.

6. Procédé de commande suivant l'une des revendications précédentes, **caractérisé en ce que** l'on met la paire de valeurs de grandeur (u(t)) réglante et de grandeur (y(t)) réglée à l'instant du passage de la première partie (36) à la deuxième partie (38), comme paire de valeurs initiale et, à l'instant de la saturation de la grandeur (y(t)) réglée, comme paire de valeurs finale dans le diagramme (116) caractéristique.

7. Procédé de commande suivant l'une des revendications précédentes, **caractérisé en ce que**, dans le premier laps (54) de temps de la deuxième phase (52), on élève la grandeur (u(t)) réglée avec une troisième élévation (58) linéaire en direction de sa valeur finale en commençant par sa valeur initiale.

8. Procédé de commande suivant l'une des revendications précédentes, **caractérisé en ce que**, dans le premier laps (54) de temps de la deuxième phase (52), on met au moins une paire de valeurs de grandeur (u(t)) réglante et de grandeur (y(t)) réglée dans le diagramme (116) caractéristique, dont la valeur (u(t)) de grandeur réglante se trouve entre sa valeur initiale et sa valeur finale.

9. Procédé de commande suivant l'une des revendications précédentes, **caractérisé en ce que** la troisième élévation (58) de la valeur de la grandeur (u(t)) réglante, dans le premier laps (54) de temps de la deuxième phase (52), est plus petite que la deuxième élévation (42) de la valeur (u(t)) réglante dans la deuxième partie (38) du premier laps (32) de temps de la première phase (30).

10. Procédé de commande suivant l'une des revendications précédentes, **caractérisé en ce que**, par un paramétrage de la courbe de valeurs de la grandeur (u(t)) réglante, on prévient un écart de la grandeur (y(t)) réglée détecté à la grandeur (y(t)) réglée réelle, dû en particulier à des effets d'inertie du système (112) asservi et/ou à un filtrage du signal (y(t)) de grandeur réglée pour sa rétractation.

11. Système (110) électrohydraulique pour effectuer un procédé de commande suivant l'une des revendications précédentes, **caractérisé en ce qu'**il est constitué au moins d'un dispositif (60) d'alimentation en pression, d'un système (112) asservi ayant un consommateur (62) hydraulique et d'un organe (114) de réglage électroproportionnel, sous la forme d'une soupape (66) proportionnelle, qui peut être commandée par une commande (18), qui reçoit, en passant par un dispositif (74, 94) formant capteur, des valeurs d'état en cours d'une grandeur (y(t)) réglée du système (112) asservi.

12. Système suivant la revendication 11, **caractérisé en ce que** le dispositif (74, 94) formant capteur détecte, comme grandeur (y(t)) réglée, la vitesse de rotation d'un moteur (64) hydraulique, prévu comme consommateur (62) hydraulique, du système (112) asservi ou une valeur de pression respective d'un circuit hydraulique du circuit (112) asservi.
